# EUROPEAN PATENT SPECIFICATION

(11) **EP 3 084 210 B1**
(45) Date of publication and mention of the grant of the patent: **09.12.2020**
(21) Application number: 14771345.7
(22) Date of filing: 22.09.2014
(51) Int. Cl.: F03D 7/02, F03D 13/00, F03D 1/06, F03D 80/70

(54) **PITCH ACTUATOR ARRANGEMENT AND METHOD OF INSTALLING A PITCH ACTUATOR ARRANGEMENT**
PITCHAKTUATORANORDNUNG UND VERFAHREN ZUR INSTALLATION EINER PITCHAKTUATORANORDNUNG
AGENCEMENT D'ACTIONNEUR DE PAS ET PROCÉDÉ D'INSTALLATION D'UN AGENCEMENT D'ACTIONNEUR DE PAS

(30) Priority: 20.12.2013 DK 201300717
(43) Date of publication of application: 26.10.2016
(73) Proprietor: Fritz Schur Energy A/S, 1263 Copenhagen K (DK)
(72) Inventor: RASMUSSEN, Peter Windfeld, DK-3500 Værløse (DK)
(74) Representative: Guardian IP Consulting I/S
(86) International application number: PCT/EP2014/070154
(87) International publication number: WO 2015/090655

(56) References cited:
- EP-A1- 1 995 453
- EP-A1- 2 420 673
- EP-A1- 2 546 516
- EP-A1- 2 565 441
- WO-A1-2012/069062
- US-A1- 2008 191 488

## Description

The present invention relates in one aspect to a pitch actuator arrangement comprising a fixed ring and a movable disk where the fixed ring and the moveable disk are interconnected by at least one drive member. In a further aspect, the invention relates to a method of installing a pitch actuator arrangement. In yet a further aspect, the invention relates to a method of installing a wind turbine.

### BACKGROUND OF THE INVENTION

A wind turbine has a rotor for converting wind energy to a rotary motion about a rotor axis. The energy from the rotary motion may be converted into useful energy by a converter, typically an electrical generator for producing electrical energy supplied to a grid. Typically, the converter and further equipment is arranged in a so-called nacelle on top of a tower. The rotor has a hub mounted to the rotor axis and at least one blade that is mounted to that hub. The hub comprises a hub housing which is typically accessible from the inside for performing service and repair work. Modern wind turbines are typically provided with a pitch system allowing for rotating the blades around a blade axis with respect to the hub. The blade axis extends radially outward with respect to the rotor axis, and follows along a longitudinal axis of the blade. The roots of the one or more blades are mounted to an attachment flange of the hub housing via the pitch system. Since the present invention is concerned with the actuation of the rotary pitch movement about the blade axis, the term "fixed" as used in the present application refers to fixed with respect to the hub. Accordingly, the term "moveable" refers to moveable with respect to the hub. In particular, the term "moveable" when used in the context of a pitching movement refers to a rotary motion with respect to the hub about the respective blade axis. A typical pitch system comprises a pitch bearing with a fixed portion configured for coupling of the pitch bearing to the hub, and with a moveable portion configured for coupling of the blade to the pitch bearing. Furthermore, the pitch system typically comprises an actuator for driving the pitching motion. Different actuator means are known in the art, such as electrical, hydraulic, or even electro-magnetic. The drive systems usually require further auxiliary devices, which are typically distributed throughout the hub and the nacelle. To ensure proper and safe operation of the wind turbine, regular service, maintenance and repair work has to be performed on the pitch system.

A pitch system is disclosed in WO 2012069062 A1. The pitch system comprises a pitch bearing including inner and outer bearing rings. The inner ring is via a first coupling member mounted to the hub and the outer bearing ring via a second coupling member to the blade. Mounting of the blade requires access to fastening means on the outside of the hub. A hydraulic cylinder drive system is arranged on the blade side of the first coupling member facing away from the hub. Access to these hydraulic cylinders is difficult and maintenance, service, repair or replacement thereof is a very complicated operation.

EP 2 565 441 A1 relates to a pitch lock system for a wind turbine rotor with blades attached to a hub through a bearing so as to allow for adjusting a blade pitch. The pitch lock system of EP 2 565 441 A1 comprises a toothed segment associated with a first ring of the bearing that can be brought into a locking engagement with a toothed element fixed to a second ring of the bearing so as to prevent rotation of the blade with respect to the hub.

One object of the invention is therefore to provide a pitch actuator arrangement improving the working conditions for installation of the wind turbine, and for service and maintenance work on the installed wind turbine.

### SUMMARY OF THE INVENTION

According to one aspect, the object of the invention is achieved by a pitch actuator arrangement according to independent apparatus claim 1, wherein particular embodiments are set out in the dependent claims referring to it. According to a further aspect, the object of the invention is achieved by independent method claim 15, wherein particular embodiments are set out in the dependent claims referring to it.

A pitch actuator arrangement of the type defined in the preamble of claim 1, comprises beyond the at least one drive member various mechanical and electrical devices that are mounted to the fixed ring. In this way it is easy for a service technician to get access to all components relating to the pitch actuator arrangement. As stated above, the drive system of a pitch actuator usually requires further auxiliary devices, which are typically distributed throughout the hub and the nacelle. For example, the auxiliary devices providing support, control and safety functions may include hydraulic and electrical interfaces, control boxes, power converter boxes, signal processing devices, hydraulic control blocks, safety devices, accumulators of hydraulic energy, and hydraulic and electrical connection lines. By collecting auxiliary functions to the pitch actuator operation for pitching a blade, such as support, interface, control, and safety, in auxiliary devices mounted on the fixed ring, the pitch actuator arrangement becomes an autonomous module that can be produced, transported, tested and installed as a complete assembly forming a module. Thereby installation of the wind turbine is simplified. Furthermore, reliability and service-friendliness of the wind turbine is improved. Most preferably, the pitch actuator arrangement is provided as a complete assembly forming a module. For a plurality of blades, the operation of the respective pitch actuators may be commonly controlled from devices arranged in the hub. Furthermore hydraulic and/or electric power and control signals may further be provided from centralized devices in the nacelle/tower in a known manner.

Preferably, the pitch actuator arrangement is provided as a module for autonomous operation, wherein the pitch actuator arrangement has respective signal and power interfaces for controlling its operation. The complete function of the module may thus be easily tested before dispatch after completed production, and after delivery on site prior to installation on the wind turbine, by merely providing hydraulic and/or electrical power as well as testing/control signals to the pitch actuator arrangement. The installed pitch actuator arrangement may be interfaced with the wind turbine control system via the respective control and/or monitoring signal interfaces, and hydraulic and/or electrical power supply interfaces providing power to the at least one drive member as well as to the auxiliary devices of the pitch actuator arrangement.

Most preferably, the auxiliary devices are mounted to be directly accessible from the inside of the hub. Thereby, the auxiliary devices become directly accessible to a technician working on the inside of the hub, thereby improving the working conditions and safety for service personnel.

In order to make service more convenient on the pitch actuator arrangement a bridge is mounted to the fixed ring on which the various mechanical and electrical devices are mounted and that the various mechanical and electrical devices comprise accumulators, an electric box, connections to and from the accumulators and the electrical box. In this way it gets even easier to get access to mechanical and electrical devices.

In order to get even more easy access to the various mechanical and electrical devices, the bridge is swivelable in relation to the fixed ring. It is preferred that the bridge is connected to the fixed ring by a hinge and/or that the bridge is detachable from the fixed ring. Most preferably, the bridge is pivotably and/or detachably mounted to the fixed ring in a way that is independent of an attachment flange for attaching the pitch actuator arrangement to the housing of the hub such that the bridge may easily be detached from the fixed ring from the inside of the hub when the pitch actuator arrangement is installed. Further preferably, when the wind turbine is in a service state, the bridge does not have a structural function beyond carrying the auxiliary devices, thereby facilitating easy loosening, pivoting away, and/or detachment of the bridge. Advantageously, the at least one drive member is mounted on the side of the pitch actuator arrangement facing towards the inside of the hub when the pitch actuator arrangement is installed on the wind turbine. Thereby the one or more drive members are accessible for service, repair and replacement directly from the inside of the hub housing. This is a considerable advantage, since the drive members of a pitch actuator arrangement for large wind turbines have a considerable size and weight which are difficult to handle in the confined space inside the hub. The various mechanical and electrical devices including devices for supporting and controlling the operation of the drive members are collected on a bridge arranged in front of the drive members. The above-described embodiments facilitate the collective removing of the auxiliary devices from their operational position, e.g. for service, repair or replacement, or simply for moving the auxiliary devices out of the way for getting access to the pitch drive devices arranged accessible from the inside of the hub just behind the bridge. Thereby the ease of service and the safety of the service personnel is considerably improved.

To secure a more rigid pitch actuator arrangement it is also advantageous that the moveable disk consists of an upper disk and a lower disk that is interconnected to a bearing. The upper and lower disks are attached to the portion of the bearing that is intended to be moveable. Here, the term "upper" refers to the side of the pitch actuator arrangement intended to face towards the blade, and the term "lower" refers to the side of the pitch actuator facing towards the hub.

By placing a disk on either side, the moveable portion of the bearing is stiffened. The moveable disk is for attachment to the blade root. By an improved stiffness of the moveable disk, an improved stiffness of the blade root/pitch actuator assembly is achieved. The sandwich design with an upper and lower disk sandwiching a moveable portion of the bearing allows for achieving an enhanced stiffness at a relatively low total weight of the pitch actuator arrangement as compared to a single sided stiffening disk. The upper and lower disks may comprise service openings, such as inspection holes, manholes for accessing the inside of the blade from the hub, and the like. Under operation of the wind turbine, at least some of the openings may be closed by suitable lids.

The bearing may be a roller bearing. The bearing may comprise an inner bearing ring and an outer bearing ring. Preferably, the outer bearing ring is fixed and the inner bearing ring is moveable. When installed on a wind turbine, the outer ring is preferably attached to the hub and the inner ring is attached to the blade. Preferably, the upper and lower disks are mounted to the inner ring forming so as to form the moveable disk. The upper and/or lower disks may have a central opening so as to form a stiffening rim along a peripheral region of the pitch actuator arrangement extending radially inward towards the centre.

The various mechanical and electrical devices are auxiliary devices for the operation of the drive member. Most preferably, all the auxiliary devices allowing for an autonomous operation and for comprehensive testing of the functions of the pitch actuator arrangement prior to installation on the wind turbine are provided on the pitch actuator arrangement itself, and in particular on the fixed ring as also described above. The pitch actuator arrangement then only requires mechanical attachment of the fixed portion, and connection to a power interface and to a signal interface in order to be operated, controlled and/or tested.

Further according to some embodiments, the various mechanical and electrical devices comprise one or more accumulators, and the one or more accumulators are configured for providing power for self-contained emergency operation of the pitch actuator independent of the interface with the wind turbine. This allows for performing a controlled emergency shut-down of the wind turbine despite e.g. a general power failure in the wind turbine, or a failure of the power/signal interfaces of the pitch actuator arrangement.

Further according to some embodiments, the auxiliary devices comprise a pitch lock blocking the movement of the moveable disk with respect to the fixed disk in a safe position. The pitch lock may comprise a locking member engaging both the fixed and the moveable portion of the pitch actuator arrangement when it is brought in a locking position. In one embodiment, the locking member may be a locking pin engaging aligned holes on the fixed and moveable portions of the pitch actuator arrangement, respectively.

Further according to some embodiments, the safe position corresponds to a pitch stop position of the blade. The pitch stop position corresponds to a 90° pitch, where the blades are positioned perpendicular to the rotor plane. Thereby the forces acting on the locking mechanism are minimized and an inadvertent start of the rotor of the wind turbine is prevented.

Further according to some embodiments, the pitch lock is activated by an activation device. The activation device acts on the locking member to bring the locking member in the locking position. The activation device may be operated manually and/or automatically. The activation device may be a purely mechanical device, or a powered device, such as a hydraulic device, an electrical device, an electro-magnetic device, a pneumatic device, or a combination thereof. For example, the locking device may be a powered device for automatic operation, and have an additional manual activation mode, which may be power assisted or purely mechanical.

Further according to some embodiments, the activation device is driven / powered / controlled from one or more auxiliary devices placed on the pitch actuator, in particular placed on the fixed ring. Thereby the pitch actuator arrangement may be configured for a self-contained safety/emergency operation of the pitch lock.

Further according to some embodiments, the pitch lock is configured to automatically engage when the pitch actuator is in the safe position. Thereby a further enhanced safety is achieved, since maintaining the blades in the safe pitch position does not require an active power source.

Further according to some embodiments, the pitch actuator comprises at least two cooperating drive members. By providing a plurality of drive members for the same pitch actuator arrangement, the size of the individual drive members is reduced. Furthermore, the forces acting on the contact points, where the drive members act on the fixed and moveable portions of the pitch actuator, respectively, are distributed, thereby reducing distortion and fatigue at the contact points due to local build-up of mechanical stress.

Further according to some embodiments, the at least one drive member is a hydraulic cylinder. In a preferred embodiment, the drive system is hydraulic. Hydraulic systems are capable of and may be configured in a cost-effective way for taking up the dynamic deformations and stresses occurring under operation of a wind turbine. According to a further aspect of the invention, a method of installing a pitch actuator arrangement on a wind turbine according to claim 15 is provided.

Further according to some embodiments, the method further comprises the step of testing operation of the module prior to attaching the module to the hub. By providing the pitch actuator module as an autonomous module, the full functionality of the module may be tested prior to installation, e.g. already before it leaves the factory, and/or on site for its installation. Preferably, testing is performed prior to lifting the module into place for attachment to the hub, in particular at the site of installation just before lifting the module in place for mounting it to the hub. A suitable testing rig merely requires attachment means for holding the fixed portion of the pitch actuator arrangement, electrical and/or hydraulic power supply interfaces and signal interfaces for controlling the test operation.

The method provides an improved logistics of production and installation of a wind turbine, and in particular an improved logistics, safety and cost of installation of the pitch actuator arrangement on the wind turbine.

By way of example, a method of installing a wind turbine includes providing a wind turbine tower on a foundation at an installation site, providing a nacelle with a main rotor axle on top of the tower; providing a hub attached to the main rotor axle; providing a pitch actuator as an autonomous module; at the site of installation; attaching the module to a hub of the wind turbine; interfacing the module with hydraulic and/or electrical power from the wind turbine; interfacing the module with safety, control and/or monitoring systems from the wind turbine; attaching the at least one blade to the module. Preferably, the method of installing a wind turbine further includes testing the pitch actuator module prior to attaching it to the hub, in particular at the installation site prior to lifting the pitch actuator module into place for its attachment to the hub.

### BRIEF DESCRIPTION OF THE DRAWINGS

Preferred embodiments of the invention will be described in more detail in connection with the appended drawings, which show in
FIG. 1 a perspective view of a part of a hub accommodating a pitch actuator arrangement according to the invention in a wind turbine,
FIG. 2 a pitch actuator arrangement for one rotor blade according to one embodiment,
FIG. 3 an exploded view of the pitch actuator arrangement of Fig.2 according to the invention,
FIG. 4 an exploded view of a pitch actuator arrangement according to a further embodiment,
Fig. 5 a hub-side elevation of the pitch actuator arrangement of Fig.4,
Fig. 6 a side elevation of the pitch actuator arrangement of Fig.4,
Fig. 7 a hub-side elevation of the pitch actuator arrangement of Fig.4 with the auxiliary devices pivoted away from the fixed ring,
Fig. 8 a side elevation of the pitch actuator arrangement of Fig.4 with the auxiliary devices pivoted away from the fixed ring,
Fig. 9 a blade-side elevation of the pitch actuator arrangement of Fig.4,
Fig. 10 a cross-sectional detail through the shaft of a contact point along line I-I in Fig.9,
Fig. 11 a cross-sectional detail of the pitch lock along line II-II in Fig.5,
Fig. 12 a hub-side elevation of a pitch actuator arrangement in a safe position, and in
Fig. 13 a hub-side elevation of a pitch actuator arrangement in an operating position.

### DETAILED DESCRIPTION OF PREFERRED EMBODIMENTS

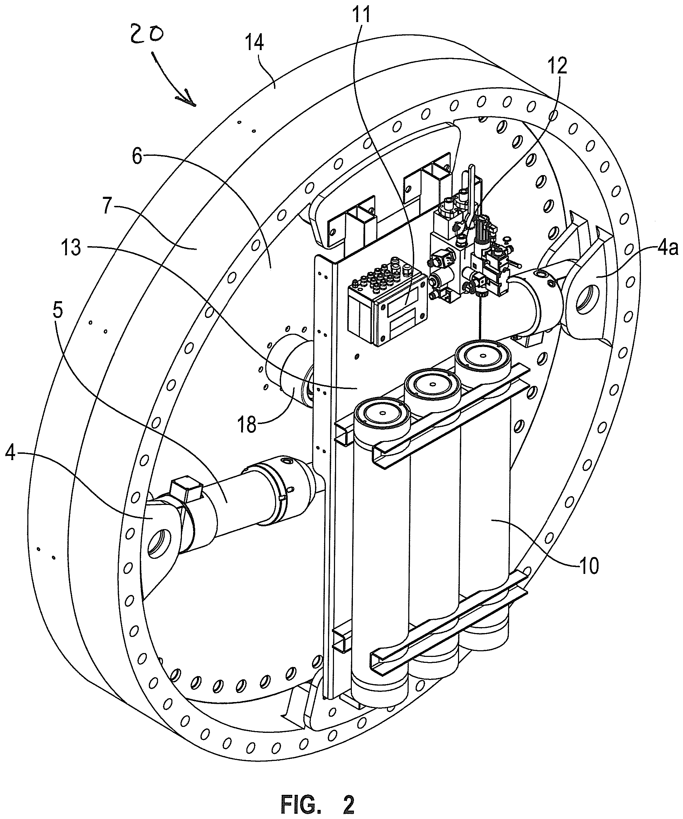

On the figures, 1 denotes a hub for a wind turbine. This hub 1 is adapted to be connected to a nacelle (not shown) at the end denoted 9. A rotor blade 2 is connected at 3b. Further connections parts for rotor blades are seen at 3, 3a. Each rotor blade has a pitch actuator arrangement 20 comprising at least one hydraulic drive member 5, so-called pitch cylinders. Each pitch cylinder is connected to a fixed ring 7 at connection points 4, 4a which can receive and end 4b, 4c (see Fig. 2) of the pitch cylinders. The opposite end of the pitch cylinder is connected to a moveable disk 6 by connection parts 18 that is adapted to receive connection parts 17, as it is well known. 8 denotes an inspection hole, which is normally covered by a closure. As it further can be seen, a bridge 13 is mounted on the fixed ring 7. The fixed ring 7 is adapted to have mechanical, pneumatic and electrical devices mounted on it such as accumulators 10 and electrical parts 11, 12, which are collected on the bridge 13. Also various connections for the mechanical and electrical devices are intended to be mounted on the bridge 13. In this way nearly all components necessary for the mechanical and electrical function of the pitch actuator arrangement are collected on the bridge and easily accessible for a technician in order to provide service, exchanging of objects and so forth. In particular, the blade level infra-structure associated with the pitch actuator arrangement

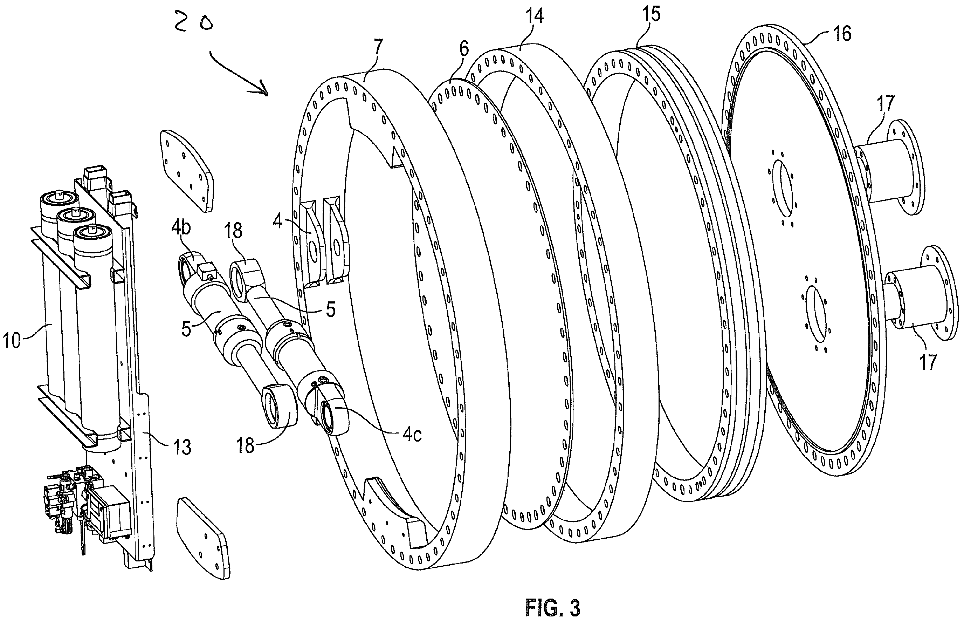

In fig 3, the pitch actuator arrangement according to the invention is shown in an exploded view. Beyond the parts that already have been explained above, fig. 3 shows a bearing with an outer ring 15 and an inner ring 14. It is possible to unmount the whole bridge 13 from the fixed ring 7. The bridge 13 can be arranged swivelable by use of a common hinge attached to the fixed ring 7 (not shown in embodiment 20).

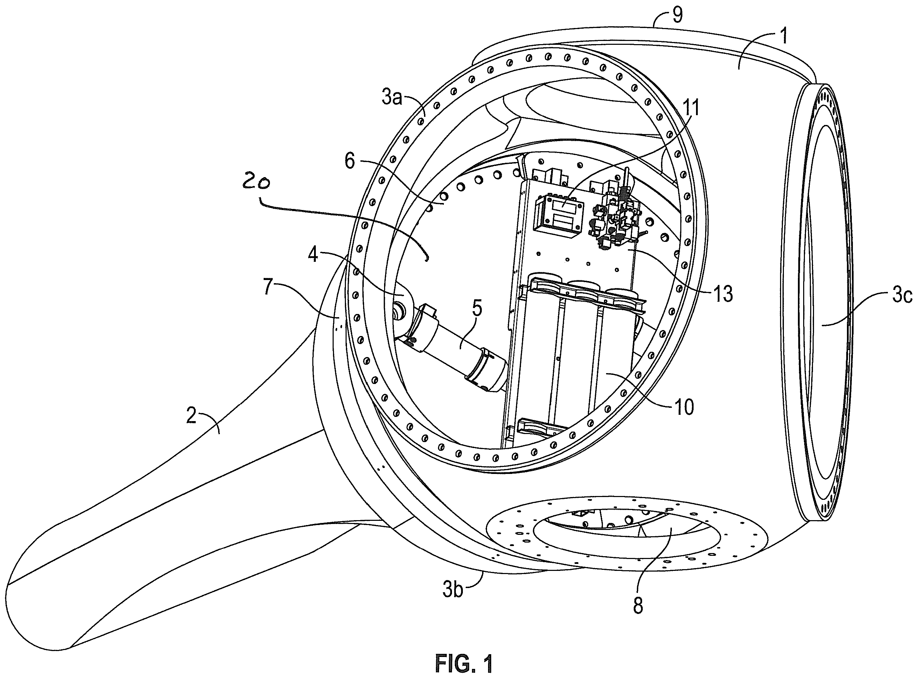

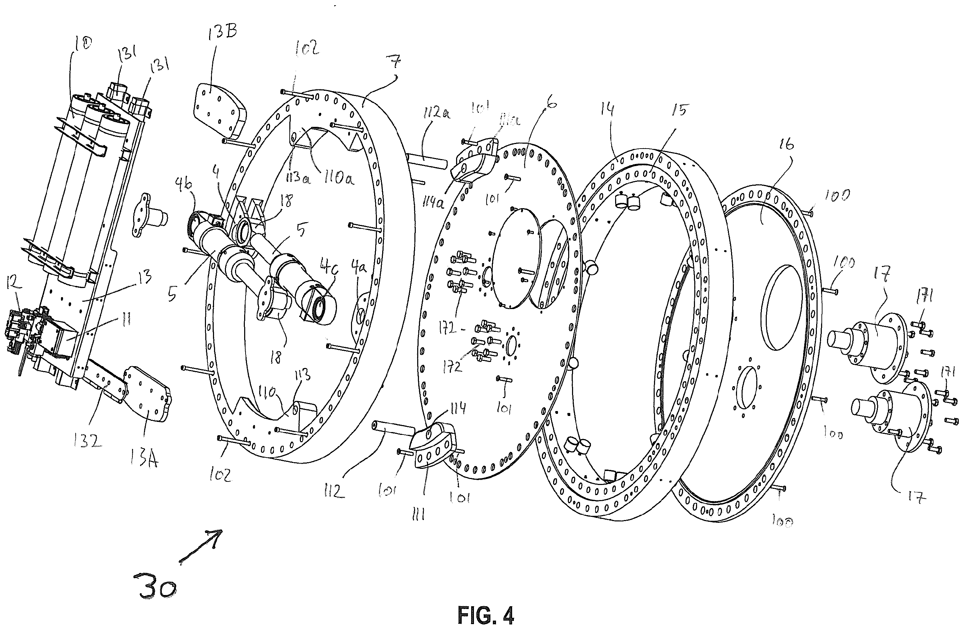

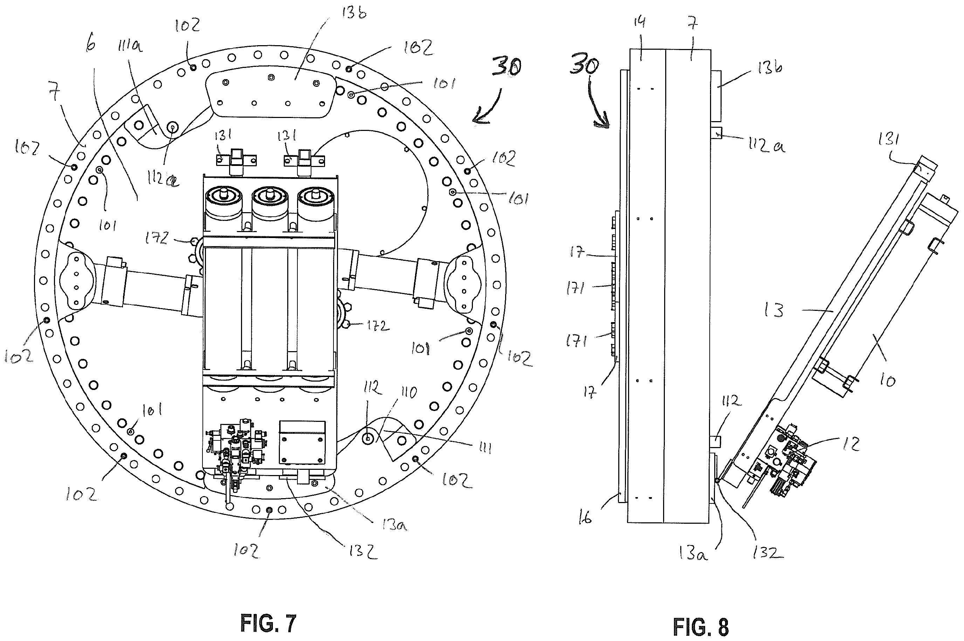

Referring in the following to Fig.4 - Fig.11, a further embodiment of a pitch actuator arrangement 30 is described. Corresponding parts are denoted with corresponding reference numbers. The pitch actuator arrangement 30 of Figs.4 - 11 differs from the embodiment shown in Figs.1 - 3 in that the bridge 13 carrying blade level auxiliary devices is pivotably hinged to the fixed ring 7 with a hinge 132, and held in place by mounting brackets 131 on brackets 13A, 13B attached to the fixed ring 7. Furthermore, the pitch actuator arrangement 30 of Figs.4 - 11 is provided with an integrated pitch lock as further detailed below.

The rotational motion is defined by a bearing having an outer ring 14 and an inner ring 15. The bearing may be a roller bearing.

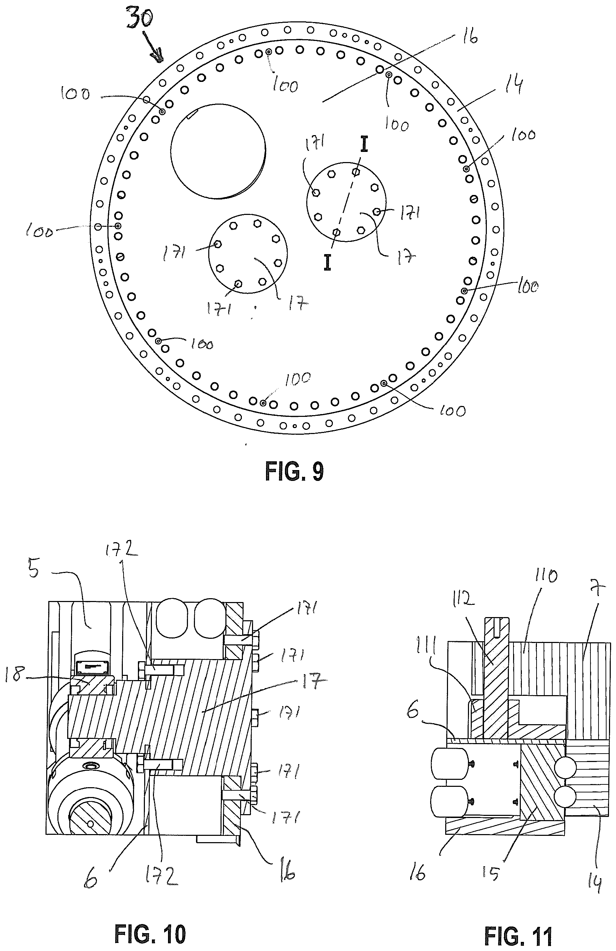

A moveable disk is formed by the upper disk 16 and the lower disk 6 sandwiching the inner ring 15 of the bearing. Furthermore, the moveable disk has shafts 17 that are passed from the blade side through suitable openings through the upper and lower disks 16, 6 as best seen in the cross-sectional detail in Fig.10. The shafts 17 are flanged to the upper (blade side) disk 16 by means of fastening elements (here bolts) 171, and to the lower disk 6 by means of fastening elements 172 (here bolts). The shafts 17 project further from the lower disk 6 towards the hub 1 to provide blade side connection points for the drive members 5. A blade side connection point 18 of the drive member is arranged on a driven part of each of the drive members 5 and is attached to the blade side connection point 17 on the moveable disk for the respective drive member 5. The connection points 18 are preferably spherical eyes. The sandwich construction of the moveable disk engaging the shafts 17 with both the upper and the lower disks on either side of the inner ring 15 is configured so as to provide sufficient stiffness for transferring the pitching forces exerted on the moveable disk by the drive members 5.

A fixed ring 7 provides a counter bearing for each of the drive members 5 in the form of a hub side connection point 4, 4a on the fixed ring 7 for the respective drive member 5. A hub side connection point 4b, 4c of the drive member is arranged on a driving part of each of the drive members 5 and is attached to the hub side connection point 4, 4a for the respective drive member 5. The fixed ring 7 is flanged to the outer ring 14 of the bearing by means of fastening means 102, here in the form of bolts, thereby forming a unit.

Besides forming a counter bearing for the drive members 5, the fixed ring 7 also carries associated auxiliary devices 10, 11, 12 on the bridge 13 with a hinged mount as described above. The bridge can thus be pivoted away to give access to the drive members 5 for service, repair and replacement work. The drive members 5 are arranged on the side of the pitch actuator arrangement that faces towards the inside of the hub 1. The whole pitch drive mechanism is thereby readily accessible for personnel working inside the hub 1.

Furthermore, the pitch actuator arrangement 30 of Figs.4 - 11 is provided with an integrated pitch lock comprising hub side parts 110, 110a, which are cast to the fixed ring, blade side parts 111, 111a, which are attached to the moveable disk, and locking pins 112, 112a that are configured to engage cooperating locking pin seats 113/114, 113a/114a on the hub side and blade side parts 110/111, 110a/111a of the respective pitch locks. A single pitch lock may be sufficient, but a plurality of pitch locks may be provided in order to reduce the load on each of the pitch locks.

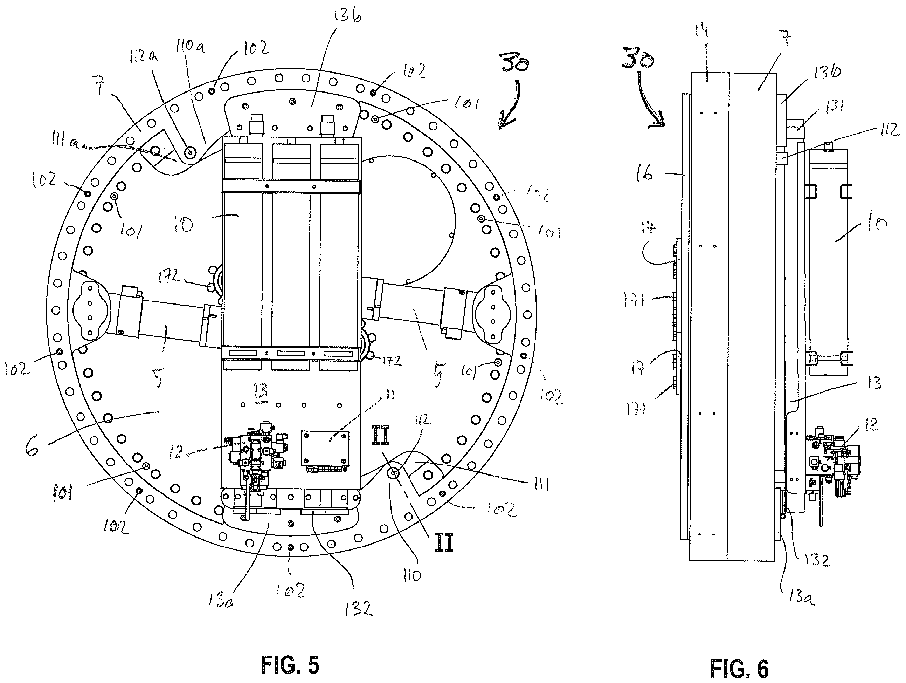

In a wind turbine orientation of the blades is controlled by a pitch control system with a pitch actuator arrangement for each blade. For each blade, the respective pitch actuator arrangement has one or more drive members 5, e.g. hydraulic cylinders, performing the rotation of the blade. The hydraulic cylinders transform, over a crank movement, the linear motion of the hydraulic cylinder to a rotational motion of the moveable disk with respect to the fixed disk, typically over a range of 0-90°. In Fig.5, the pitch lock mechanism is shown in a stop position (90°) where the blades are positioned perpendicular to the rotor plane. The stop position is a safe position of the blades. On the fixed ring 7, the stationary part 110, 110a of the mechanism is integrated in the bracket supporting the bridge 13. The rotating part 111, 111a of the pitch lock is placed on the moveable disk. To interlock the hub side part 110, 110a and the blade side part 111, 111a of the pitch lock, the pin 112 is pushed into the two parts, as best seen in the cross-sectional detail in Fig.11. No means of activations is shown, but both manual, hydraulic or electrical drive members are suitable for activation.

In case the pitch lock is activated by use of a hydraulic or electrical drive member, additional system safety is achievable. The rotary part 111 can be designed in such a way, that the pin 112 can be in the locking position when the drive reaches 90° and still engage 111 completely. The advantage is, that the pitch system can be released from the task of holding the blade in 90°, thereby minimizing the risk of system failure in the case of e.g. an accumulator leakage.

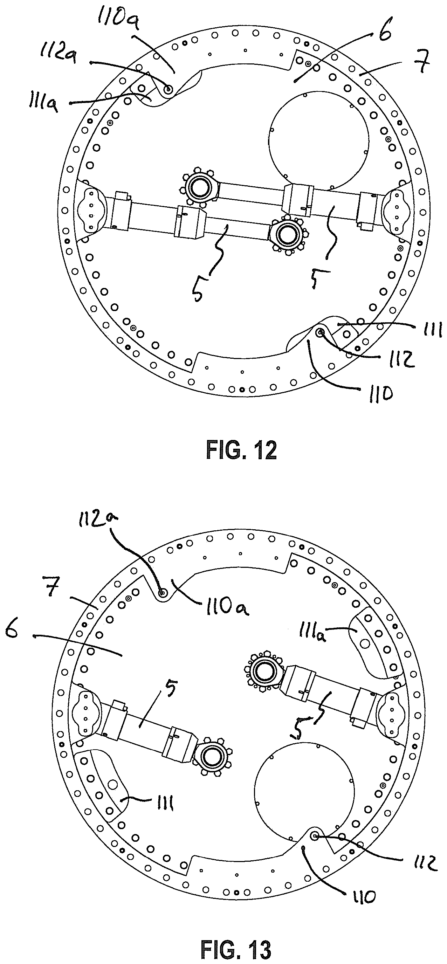

As mentioned above, in a wind turbine, one or more drive members, e.g. hydraulic cylinders perform the rotation of the blade. The one or more hydraulic cylinders transform, over a crank movement, the linear motion of the hydraulic cylinder to a rotational movement, typically in an angular position range between 0-90°. The position of blade rotational speed and position can be measured either by a rotational device placed in the blade center, or more conveniently by a position transducer, mounted parallel, inside or outside the cylinder. This transducer creates an output proportional to the position of the cylinder, allowing the control system to calculate the current pitch angle, and hence control it. The pitching motion using hydraulic cylinders as drive members is illustrated in Fig.12 and Fig.13 by way of example. In Fig.12, the pitch mechanism is shown with the hydraulic cylinders 5 fully extracted. The positions is normally denoted the pitch stop position equal to 90° pitch, where the blades are positioned perpendicular to the rotor plane. Furthermore, the pitch lock 110/111/112, 110a/111a/112a is engaged. Figure 13 shows the hydraulic cylinders 5 in fully retracted position. Here the blade is positioned in the rotor plane, known as 0° pitch. In this position, the pitch lock 110/111/112, 110a/111a/112a is not engaged. This position is maintained until the turbine production reaches nominal load. From this point on, the angle is reduced in a controlled manner decided by the amount of incoming energy to the turbine. As the highest operational loads will be applied to the pitch mechanism around the time where the blades move away from 0°, it is most preferable that the torque transferable from the drive member 5 to the blade is as high as possible at this point. This may be achieved by arranging the geometry of the hydraulic cylinders and the location of the fixed and moveable connecting points with respect to each other accordingly.

### LIST OF REFERENCE NUMBERS

- 1: hub
- 2: blade
- 3: blade connection point
- 4, 4a: hub side connection point for drive member
- 4b, 4c: hub side connection point of the drive member
- 5: drive member
- 6: lower disk
- 7: fixed ring
- 8: inspection hole
- 9: hub connection to the nacelle
- 10, 11, 12: auxiliary devices (accumulators, control box, pitch manifold)
- 13: bridge
- 13a, 13b: mounting bracket
- 14: outer bearing ring
- 15: inner bearing ring
- 16: upper disk
- 17: blade side connection point for drive member
- 18: blade side connection point of the drive member
- 20, 30: pitch actuator arrangement
- 100, 101, 102: fastening means (here bolts)
- 110, 110a: hub side part of pitch lock (fixed)
- 111, 111a: blade side part of pitch lock (moveable)
- 112, 112a: locking pin
- 113, 113a: hub side seat for the locking pin
- 114, 114a: blade side seat for the locking pin
- 131: mounting bracket
- 132: hinge
- 171, 172: fastening means (here bolts)

## Claims

1. A pitch actuator arrangement (20, 30) comprising a fixed ring (7) and a movable disk where the fixed ring (7) and the moveable disk are interconnected by at least one drive member (5), wherein beyond the at least one drive member (5) a bridge (13) is mounted to the fixed ring, wherein the pitch actuator arrangement (20, 30) further comprises auxiliary devices (10, 11, 12) for the operation of the drive member (5), wherein the auxiliary devices (10, 11, 12) are mounted on the bridge (13), **characterized in that** the bridge (13) is swivelable in relation to the fixed ring (7).

2. A pitch actuator according to claim 1, wherein the auxiliary devices (10, 11, 12) comprise accumulators, an electric box, connections to and from the accumulators and the electrical box.

3. A pitch actuator according to claim 1 or claim 2, wherein the bridge (13) is connected to the fixed ring (7) by a hinge (132).

4. A pitch actuator according to any of the claims 1 - 3, wherein the bridge (13) is detachable from the fixed ring (7).

5. A pitch actuator according to any of the claims 1 - 4, wherein the moveable disk consists of an upper disk (16) and a lower disk (6) that is interconnected to a bearing.

6. A pitch actuator according to any of the preceding claims, wherein the auxiliary devices (10, 11, 12) comprise one or more accumulators, and wherein the one or more accumulators are configured for providing power for self-contained emergency operation of the pitch actuator independent of the interface with the wind turbine.

7. A pitch actuator according to any of the preceding claims, wherein the auxiliary devices (10, 11, 12) comprise a pitch lock blocking the movement of the moveable disk with respect to the fixed disk (7) in a safe position.

8. A pitch actuator according to claim 7, wherein the safe position corresponds to an angle of the blade (2) with respect to the rotor plane of about 90 degrees.

9. A pitch actuator according to claim 7 or claim 8, wherein the pitch lock is activated by an activation device.

10. A pitch actuator according to claim 9, wherein the pitch lock activation device is one of a hydraulic device, an electrical device, and an electro-magnetic device.

11. A pitch actuator according to claim 9 or claim 10, wherein the pitch lock activation device is controlled from one or more auxiliary devices (10, 11, 12) placed on the pitch actuator/fixed ring.

12. A pitch actuator according to any of the claims 7-11, wherein the pitch lock is configured to automatically engage when the pitch actuator is in the safe position.

13. A pitch actuator according to any of the preceding claims, comprising at least two cooperating drive members (5).

14. A pitch actuator according to any of the preceding claims, wherein the at least one drive member (5) is a hydraulic cylinder.

15. Method of installing a pitch actuator arrangement on a wind turbine, the method comprising the steps of
- producing a pitch actuator as a module;
- transporting the module to the site of installation;
- attaching the module to a hub (1) of the wind turbine;
- interfacing the module with hydraulic and/or electrical power from the wind turbine; and
- interfacing the module with safety, control and/or monitoring systems from the wind turbine;
**characterized in that** the pitch actuator is a pitch actuator arrangement according to any one of claims 1-14.

16. Method according to claim 15, further comprising the step of
- testing the module prior to attaching the module to the hub (1).

17. Method according to claim 16, wherein testing is performed prior to lifting the module into place for attachment to the hub (1).

## Patentansprüche

1. Pitch-Aktuator-Anordnung (20, 30), umfassend einen fixierten Ring (7) und eine bewegliche Scheibe, wobei der fixierte Ring (7) und die bewegliche Scheibe durch mindestens ein Antriebselement (5) miteinander verbunden sind, wobei jenseits des mindestens einen Antriebselements (5) eine Brücke (13) an dem fixierten Ring angebracht ist, wobei die Pitch-Aktuator-Anordnung (20, 30) weiter Hilfsvorrichtungen (10, 11, 12) für den Betrieb des Antriebselements (5) umfasst, wobei die Hilfsvorrichtungen (10, 11, 12) auf der Brücke (13) angebracht sind, **dadurch gekennzeichnet, dass** die Brücke (13) in Bezug auf den fixierten Ring (7) schwenkbar ist.

2. Pitch-Aktuator nach Anspruch 1, wobei die Hilfsvorrichtungen (10, 11, 12) Akkumulatoren, einen Schaltkasten, Verbindungen zu und von den Akkumulatoren und dem Schaltkasten umfassen.

3. Pitch-Aktuator nach Anspruch 1 oder Anspruch 2, wobei die Brücke (13) mit dem fixierten Ring (7) durch ein Scharnier (132) verbunden ist.

4. Pitch-Aktuator nach einem der Ansprüche 1 bis 3, wobei die Brücke (13) von dem fixierten Ring (7) lösbar ist.

5. Pitch-Aktuator nach einem der Ansprüche 1 bis 4, wobei die bewegliche Scheibe aus einer oberen Scheibe (16) und einer unteren Scheibe (6) besteht, die mit einem Lager verbunden ist.

6. Pitch-Aktuator nach einem der vorstehenden Ansprüche, wobei die Hilfsvorrichtungen (10, 11, 12) einen oder mehrere Akkumulatoren umfassen und wobei der eine oder die mehreren Akkumulatoren ausgestaltet sind, Energie für einen autonomen Notbetrieb des Pitch-Aktuators unabhängig von der Schnittstelle mit der Windkraftanlage bereitzustellen.

7. Pitch-Aktuator nach einem der vorstehenden Ansprüche, wobei die Hilfsvorrichtungen (10, 11, 12) eine Pitch-Verriegelung umfassen, welche die Bewegung der beweglichen Scheibe in Bezug auf die fixierte Scheibe (7) in einer sicheren Position blockiert.

8. Pitch-Aktuator nach Anspruch 7, wobei die sichere Position einem Winkel des Blatts (2) in Bezug auf die Rotorebene von ungefähr 90 Grad entspricht.

9. Pitch-Aktuator nach Anspruch 7 oder Anspruch 8, wobei die Pitch-Verriegelung durch eine Aktivierungsvorrichtung aktiviert wird.

10. Pitch-Aktuator nach Anspruch 9, wobei die Aktivierungsvorrichtung der Pitch-Verriegelung eine von einer hydraulischen Vorrichtung, einer elektrischen Vorrichtung und einer elektromagnetischen Vorrichtung ist.

11. Pitch-Aktuator nach Anspruch 9 oder Anspruch 10, wobei die Aktivierungsvorrichtung der Pitch-Verriegelung von einer oder mehreren Hilfsvorrichtungen (10, 11, 12), die auf dem Pitch-Aktuator/fixierten Ring angeordnet sind, gesteuert wird.

12. Pitch-Aktuator nach einem der Ansprüche 7 bis 11, wobei die Pitch-Verriegelung ausgestaltet ist, automatisch einzugreifen, wenn sich der Pitch-Aktuator in der sicheren Position befindet.

13. Pitch-Aktuator nach einem der vorstehenden Ansprüche, umfassend mindestens zwei zusammenwirkende Antriebselemente (5).

14. Pitch-Aktuator nach einem der vorstehenden Ansprüche, wobei das mindestens eine Antriebselement (5) ein Hydraulikzylinder ist.

15. Verfahren zum Installieren einer Pitch-Aktuator-Anordnung auf einer Windkraftanlage, wobei das Verfahren folgende Schritte umfasst
- Herstellen eines Pitch-Aktuators als ein Modul;
- Transportieren des Moduls zum Installationsort;
- Befestigen des Moduls an einer Nabe (1) der Windkraftanlage;
- Koppeln des Moduls mit hydraulischer und/oder elektrischer Energie von der Windkraftanlage; und
- Koppeln des Moduls mit Sicherheits-, Steuer- und/oder Überwachungssystemen von der Windkraftanlage;
**dadurch gekennzeichnet, dass** der Pitch-Aktuator eine Pitch-Aktuator-Anordnung nach einem der Ansprüche 1 bis 14 ist.

16. Verfahren nach Anspruch 15, weiter umfassend folgenden Schritt
- Testen des Moduls vor dem Befestigen des Moduls an der Nabe (1).

17. Verfahren nach Anspruch 16, wobei das Testen ausgeführt wird, bevor das Modul hochgehoben und zur Befestigung an der Nabe (1) in Position gebracht wird.

## Revendications

1. Agencement d'actionneur de pas (20, 30) comprenant une bague fixe (7) et un disque mobile où la bague fixe (7) et le disque mobile sont interconnectés par au moins un élément d'entraînement (5), dans lequel, au-delà de l'au moins un élément d'entraînement (5), un pont (13) est monté sur la bague fixe,
dans lequel l'agencement d'actionneur de pas (20, 30) comprend en outre des dispositifs auxiliaires (10, 11, 12) pour le fonctionnement de l'élément d'entraînement (5), dans lequel les dispositifs auxiliaires (10, 11, 12) sont montés sur le pont (13), **caractérisé en ce que** le pont (13) peut pivoter par rapport à la bague fixe (7).

2. Actionneur de pas selon la revendication 1, dans lequel les dispositifs auxiliaires (10, 11, 12) comprennent des accumulateurs, une boîte électrique, des connexions vers et depuis les accumulateurs et la boîte électrique.

3. Actionneur de pas selon la revendication 1 ou la revendication 2, dans lequel le pont (13) est connecté à la bague fixe (7) par une charnière (132).

4. Actionneur de pas selon l'une quelconque des revendications 1 à 3, dans lequel le pont (13) peut être détaché de la bague fixe (7).

5. Actionneur de pas selon l'une quelconque des revendications 1 à 4, dans lequel le disque mobile consiste en un disque supérieur (16) et un disque inférieur (6) qui est interconnecté à un palier.

6. Actionneur de pas selon l'une quelconque des revendications précédentes, dans lequel les dispositifs auxiliaires (10, 11, 12) comprennent un ou plusieurs accumulateurs, et dans lequel les un ou plusieurs accumulateurs sont configurés pour fournir de l'énergie pour un fonctionnement d'urgence autonome de l'actionneur de pas indépendamment de l'interface avec l'éolienne.

7. Actionneur de pas selon l'une quelconque des revendications précédentes, dans lequel les dispositifs auxiliaires (10, 11, 12) comprennent un verrou de pas bloquant le mouvement du disque mobile par rapport au disque fixe (7) dans une position sûre.

8. Actionneur de pas selon la revendication 7, dans lequel la position sûre correspond à un angle de la pale (2) par rapport au plan de rotor d'environ 90 degrés.

9. Actionneur de pas selon la revendication 7 ou la revendication 8, dans lequel le verrou de pas est activé par un dispositif d'activation.

10. Actionneur de pas selon la revendication 9, dans lequel le dispositif d'activation de verrou de pas est l'un parmi un dispositif hydraulique, un dispositif électrique et un dispositif électromagnétique.

11. Actionneur de pas selon la revendication 9 ou la revendication 10, dans lequel le dispositif d'activation de verrou de pas est commandé depuis un ou plusieurs dispositifs auxiliaires (10, 11, 12) placés sur l'actionneur de pas/la bague fixe.

12. Actionneur de pas selon l'une quelconque des revendications 7 à 11, dans lequel le verrou de pas est configuré pour s'engager automatiquement lorsque l'actionneur de pas est dans la position sûre.

13. Actionneur de pas selon l'une quelconque des revendications précédentes, comprenant au moins deux éléments d'entraînement coopératifs (5).

14. Actionneur de pas selon l'une quelconque des revendications précédentes, dans lequel l'au moins un élément d'entraînement (5) est un cylindre hydraulique.

15. Procédé d'installation d'un agencement d'actionneur de pas sur une éolienne, le procédé comprenant les étapes consistant à
- produire un actionneur de pas en tant que module ;
- transporter le module sur le site d'installation ;
- attacher le module à un moyeu (1) de l'éolienne ;
- relier le module à l'énergie hydraulique et/ou électrique de l'éolienne ; et
- relier le module à des systèmes de sécurité, de commande et/ou de surveillance de l'éolienne ;
**caractérisé en ce que** l'actionneur de pas est un agencement d'actionneur de pas selon l'une quelconque des revendications 1 à 14.

16. Procédé selon la revendication 15, comprenant en outre l'étape consistant à
- tester le module avant d'attacher le module au moyeu (1).

17. Procédé selon la revendication 16, dans lequel le test est effectué avant de soulever le module en place pour l'attache au moyeu (1).
